# EUROPEAN PATENT APPLICATION

(11) **EP 3 301 276 A1**
(43) Date of publication of application: **04.04.2018**
(21) Application number: 16191051.8
(22) Date of filing: 28.09.2016
(51) Int. Cl.: F02C 6/10, F04D 29/058, F02C 7/057, F02C 9/16, F04D 19/02, F04D 25/06, F02C 7/06, F01D 5/02

(54) **A ROTATING DEVICE AND A COMPRESSOR ASSEMBLY FOR CONTROLLING MASS FLOW IN A GAS TURBINE**

(71) Applicant: Siemens Aktiengesellschaft, 80333 München (DE)
(72) Inventor: Milner, Glynn, Fiskerton, Lincoln LN3 4ER (GB)
(74) Representative: Maier, Daniel Oliver

(57) **Abstract**

A rotating device for a compressor of a gas turbine is presented. The rotating device, connectible with the compressor, includes a first shaft, a second shaft, rotatable blades, a bearing assembly, an external drive and an input port for receiving electrical energy for the external drive. The first shaft, positioned axially upstream of compressor's rotor assembly and concentrically around compressor's central shaft, is rotationally coupled to the rotor assembly. The second shaft is concentrically arranged around the first shaft, and thereinbetween is the bearing assembly that decouples second shaft's rotation from first shaft's rotation and transfers load from the second to the first shaft. The rotatable blades extend radially outward from the second shaft, and are rotationally coupled to the second shaft. The external drive is coupled to the second shaft and is configured to control the second shaft's rotation.

## Description

The present technique relates generally to a compressor for a gas turbine, and particularly to techniques for controlling mass flow in a compressor of a gas turbine.

The drive for lower weight and cost directs the design of new compressors towards high specific flow, i.e. to maximize the mass flow of air sucked into the compressor for a given speed. This has the effect of also maximizing the possible pressure ratio per stage. This optimization means that there is very little or no possibility to increase the mass flow once the compressor is designed. Having a control over mass flow is beneficial in controlling emissions, e.g. carbon monoxide (CO), particularly at partial load.

In a single shaft constant speed gas turbine a reduction in mass flow may be accomplished by closing the Variable Guide Vanes (VGVs), typically a reduction in mass flow rate by as much as 50% is achievable. The mass flow rate from the compressor can be reduced whilst maintaining the firing temperature which results in an increase in exhaust temperature due to the reduced pressure ratio, beneficial for heat generation or combined cycle operation. For example, the firing temperature may be kept constant down to 85% load, before the exhaust temperature reaches its maximum value, and then kept constant whilst the mass flow rate and firing temperature is decreased further as the load is reduced. However, the closing of the VGVs cannot reduce the mass flow if required further and thus another technique to control mass flow, in addition to mass flow reduction by closing of the VGVs, may be beneficial. Furthermore, although the closing of the VGVs may provide reduction of mass flow, there exists no technique that can increase mass flow further when the VGVs are open at their optimal angle.

For a multi shaft turbine, for example a twin shaft gas turbine, where the gas generator is mechanically disconnected from the power turbine, the power output and the mass flow rate are typically controlled by the firing temperature, from which they cannot easily be made independent. The firing temperature cannot, therefore, be kept constant at partial load, without further measures, such as creating parasitic losses. In such cases, the established approach addressing CO emission control is to bleed off air from the compressor discharge to the turbine exhaust, in order to raise the fuel to air ratio inside the combustor i.e. using a higher firing temperature than would otherwise be required to compensate for the parasitic loss or, alternatively, to recirculate bled air to the compressor inlet with the same purpose. For example utilising these parasitic loss techniques could enable the twin shaft gas turbine to operate at a firing temperature corresponding to a 20% higher load, e.g. the same temperature at 80% load as for 100% (full) load. The load shift as a percentage value will depend on how much air that can be extracted from the compressor and also what maximum value of turbine exhaust temperature that can be used. As with all losses the parasitic losses generate a reduction in the gas turbine cycle efficiency.

As an alternative to the approach above, it is also known to provide the power turbine of a twin shaft gas turbine with an inlet VGV. The main drawback of such solution is that, with increasing turbine inlet temperatures, moving parts in or near the main gas path tend to suffer from a lower reliability and increased service/maintenance requirements.

Some partial load emission controls can be handled by controlling directly the combustor itself. A portion of the combustion air can be removed from the fuel air mixing process and then injected as dilution air downstream of the flame, but upstream the turbine inlet. The portion of air bypassing the flame in this way can be controlled via a valve arrangement. However, this results in decreased efficiency, as the compressor does not function at optimum efficiency because more air is compressed in this technique than is required or used for combustion.

With respect to the aforementioned state of the art it is an object of the invention to provide a technique for controlling, i.e. increasing or decreasing, mass flow in a compressor of a gas turbine engine. The technique is desired to be applicable for compressors of both single shaft constant speed gas turbine and of multi shaft variable speed gas turbine assembly. It is beneficial if the desired technique is used on its own or in combination with aforementioned techniques to control a mass flow in a compressor of a gas turbine.

The above object is achieved by a rotating device for controlling a mass flow in a compressor according to claim 1, a compressor assembly comprising the rotating device according to claim 11, and a gas turbine engine comprising a compressor assembly having the rotating device according to claim 15, of the present technique. Advantageous embodiments of the present technique are provided in dependent claims.

In a first aspect of the present technique, a rotating device is presented. The rotating device is connectible with a compressor for a gas turbine engine. The rotating device is connectible upstream of a rotor assembly of the compressor. The rotating device includes a first shaft, a second shaft, one or more sets of rotatable blades, a bearing assembly, an external drive and an input port. The first shaft is to be positioned within the compressor axially upstream of the rotor assembly and concentrically around a central shaft of the compressor. The first shaft is rotationally coupled to the rotor assembly such that the first shaft rotates along with the rotor assembly at the same speed as the rotor assembly. The first shaft and the second shaft both are tubular in shape. The second shaft is concentrically arranged around the first shaft i.e. at least a part of the first shaft is positioned inside bore of the second shaft, or in other words the second shaft is like a sleeve arranged around the outer surface of the first shaft, albeit radially not in direct physical contact. The first and the second shaft are non-contiguous i.e. they do not physically contact each other directly. At least one set of rotatable blades extend radially outward from the second shaft, particularly from an outer surface of the second shaft. The first shaft is non-contiguously positioned within an inner surface of the second shaft, whereas the rotatable blades are positioned on the outer surface of the second shaft. The rotatable blades are rotationally coupled with the second shaft such that the rotatable blades rotate along with the second shaft at the same speed.

The bearing assembly, positioned radially between the first shaft and the second shaft, is configured to decouple a rotation of the second shaft from a rotation of the first shaft. The bearing assembly, or a part of the bearing assembly, may also function to transfer load from the second shaft to the first shaft. The external drive is coupled to the second shaft, and is configured to control the rotation of the second shaft with respect to a stationary reference for example a casing of the compressor or ground. The external drive can be energized and is able to control the rotation of the second shaft by consumption of energy. The energy, for example, electrical energy required by the external drive to be energized is received by the rotating device via the input port. By energizing the external drive, rotations of the second shaft can be generated which are in same direction and with same speed as that of the first shaft, and/or which are in same direction and but with speed that is different from that of the first shaft, relative to ground. When the external drive is energized such that a rotation caused in the second shaft is faster than the rotation of the first shaft, then the second shaft in turn causes the rotatable blades to rotate faster than the blades of the rotor assembly and hence an increase in mass flow is achieved. However, when the external drive is energized in such a way that a rotation in the second shaft is slower than the rotation of the first shaft, then the second shaft causes the rotatable blades to rotate slower than the blades of the rotor assembly and hence a decrease in the mass flow is achieved. Furthermore, when the external drive is not energized then the second shaft is stationery relative to the ground, and also to the first shaft.

Since the rotatable blades arranged on the second shaft rotate at the same speed as the second shaft whereas the rotor assembly having the rotor blades rotates at the same speed as the first shaft, by the present technique, a rotation of the rotatable blades is achieved that is either at the same speed as the rotor blades of the rotor assembly or at a different speed i.e. faster or slower than the rotor blades of the rotor assembly. As a result an increase in the mass flow in the compressor (when the rotatable blades are made to rotate faster than the rotor blades of the rotor assembly) or a decrease in the mass flow of the compressor (when the rotatable blades are made to rotate slower than the rotor blades of the rotor assembly) is achievable.

In one embodiment of the rotating device, the bearing assembly includes a first bearing unit and a second bearing unit, both positioned radially between the first shaft and the second shaft and axially apart from each other. The first bearing unit is positioned axially upstream of the second bearing unit. The two bearing units provide more stability to the second shaft. In another embodiment of the rotating device, the first bearing unit comprises a rotating element bearing. Such a bearing helps in transferring the thrust load of the second shaft to the first shaft which in turn is transferred to the central bolt of the compressor. Furthermore, since the first bearing unit is positioned axially upstream it is easy to provide lubrication to the first bearing unit. In another embodiment of the rotating device, the second bearing unit comprises a rotating element bearing. Such a bearing helps in transferring the thrust load of the second shaft to the first shaft which in turn is transferred to the central bolt of the compressor.

In an alternate embodiment of the rotating device, the second bearing unit comprises a magnetic bearing configured to maintain concentricity of the first shaft and the second shaft, when the magnetic bearing is energized. Since the second bearing unit, positioned axially downstream, is a magnetic bearing, it does not require lubrication. In a related embodiment, the rotating device having the magnetic bearing also includes a catcher bearing configured to provide location of the first shaft to the second shaft, particularly when the magnetic bearing is de-energized. An outer surface of the catcher bearing is connected with or fixed with an inner surface of the second shaft. An inner diameter of the catcher bearing is larger than an outer diameter of the first shaft; therefore generally there is a clearance between outer surface of the first shaft and the inner surface of the catcher bearing. If the magnetic bearing is de-energized the second shaft is no longer held concentrically with the first shaft. Therefore the second shaft would drop vertically until the inner surface of the catcher bearing contacts outer surface of the first shaft. The amount of drop is intended to be less than a radial clearance in the magnetic bearing therefore under no circumstances does the outer surface of first shaft touches or contacts the magnetic bearing stator which would be damaging and expensive to rectify.

In another embodiment of the rotating device, the external drive is a variable speed drive. Thus the external drive is able to drive or exert rotation on the second shaft at variable speeds. One example of the variable speed drive is an electrical motor. This presents a simple construct of the rotating device. In another embodiment of the rotating device, the external drive is either a hydraulic motor or a pneumatic motor.

In another embodiment of the rotating device, the rotating device includes a plurality of sets of rotatable blades positioned on the second shaft. The sets of rotatable blade extend radially outward from the second shaft and are axially distanced from each other. Thus more stages of the rotatable blades can be rotated relatively faster or slower or at the same speed with the rotor blades of the rotor assembly, therefore achieving an increase or decrease in the mass flow.

In a second aspect of the present technique, a compressor assembly for a gas turbine engine is presented. The compressor assembly includes a central shaft of a compressor, a rotor assembly of the compressor concentrically arranged around the central shaft, and a rotating device according to the aforementioned first aspect of the present technique. The rotating device is arranged axially upstream of the rotor assembly. The first shaft is positioned, within a casing of the compressor, axially upstream of the rotor assembly and concentrically around the central shaft of the compressor. The first shaft is rotationally coupled to the rotor assembly such that the first shaft rotates along with the rotor assembly. The advantage of the compressor assembly is that an increase or decrease in the mass flow is achievable. Thus, the compressor assembly of the present technique has the same advantages as the abovementioned aspect of the present technique.

In an embodiment of the compressor assembly, the external drive is positioned within the casing of the compressor, radially in between the second shaft and the casing. This makes the compressor assembly compact.

In another embodiment of the compressor assembly, the external drive is positioned outside the casing of the compressor. Since the external drive is positioned outside of the casing, different sizes and types of external drive may be used, as the external drive is not limited by space constraints.

In another embodiment of the compressor assembly, the external drive is coupled with the second shaft via a gear assembly. Thus the second shaft can be driven by the external drive that is located physically separated from the second shaft.

In a third aspect of the present technique, a gas turbine engine is presented. The gas turbine engine includes a compressor assembly according to the aforementioned second aspect of the present technique. Thus, the gas turbine engine of the present technique has the same advantages as the abovementioned aspect of the present technique.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: shows part of an exemplary embodiment of a gas turbine engine in a sectional view and in which an exemplary embodiment of a rotating device, within a compressor of the gas turbine engine, of the present technique is incorporated;
- FIG 2: schematically represents an exemplary embodiment of a multi-shaft turbine in which the present rotating device is incorporated;
- FIG 3: schematically represents another exemplary embodiment of the multi-shaft turbine in which the present rotating device is incorporated;
- FIG 4: schematically represents an exemplary embodiment of the rotating device of the present technique incorporated in the compressor;
- FIG 5: schematically represents a general figure to understand terms used for explaining different elements in the FIGs of the present technique;
- FIG 6: schematically represents a section of the rotating device within the compressor sectioned at arrows marked A in FIG 4;
- FIG 7: schematically represents an exemplary embodiment of an arrangement of a first bearing unit with respect to a first shaft and a second shaft of the rotating device;
- FIG 8: schematically represents an exemplary embodiment of an arrangement of an external drive with respect to the second shaft of the rotating device and a casing of the compressor;
- FIG 9: schematically represents a section of another exemplary embodiment, having a magnetic bearing and a catcher bearing, of the rotating device of the present technique incorporated in the compressor;
- FIG 10: schematically represents an exemplary embodiment of an arrangement of the magnetic bearing with respect to the first shaft and the second shaft of the rotating device;
- FIG 11: schematically represents an exemplary embodiment of an arrangement of the catcher bearing with respect to the first shaft and the second shaft of the rotating device when the magnetic bearing is deenergized;
- FIG 12: schematically represents another exemplary embodiment of the compressor assembly; and
- FIG 13: schematically represents an exemplary embodiment of a gear arrangement with respect to the second shaft of the rotating device; in accordance with aspects of the present technique.

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

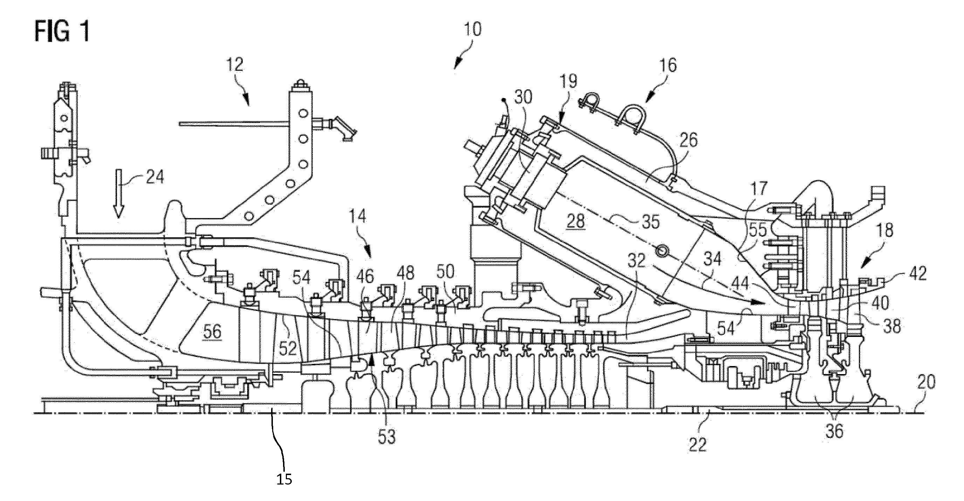

FIG. 1 shows an example of a gas turbine engine 10 in a sectional view. The gas turbine engine 10 comprises, in flow series, an inlet 12, a compressor 14 or compressor section 14, a combustor section 16 and a turbine section 18 which are generally arranged in flow series and generally about and in the direction of a rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14. The compressor 14 has a central shaft 15, also referred to as a central bolt 15 or a tension bolt 15, which connects with, or is a one-part extension of, the shaft 22. The central bolt 15 supports the compressor 14 and bears load thrusts generated by the compressor 14 during operation of the gas turbine engine 10.

In operation of the gas turbine engine 10, air 24, which is taken in through the air inlet 12 is compressed by the compressor 14 and delivered to the combustion section or burner section 16. The burner section 16 comprises a burner plenum 26, one or more combustion chambers 28 extending along a longitudinal axis 35 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned in the combustion chamber 28 and the combustion gas 34 or working gas from the combustion is channelled through the combustion chamber 28 to the turbine section 18 via a transition duct 17.

This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channelling the combustion gases to the turbine section 18.

The turbine section 18 comprises a number of blade carrying discs 36 attached to the shaft 22. In the present example, two discs 36 are shown each carrying an annular array of turbine blades 38. However, the number of blade carrying discs 36 could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided to turn the flow of working gas onto the turbine blades 38.

The combustion gas 34 from the combustion chamber 28 enters the turbine section 18 and drives the turbine blades 38 which in turn rotate the shaft 22. The guiding vanes 40, 44 serve to optimise the angle of the combustion or working gas 34 on the turbine blades 38.

The turbine section 18 drives the compressor 14, particularly rotates or drives a rotor assembly (not shown in FIG 1) of the compressor 14. The compressor 14 comprises an axial series of vane stages 46 and compressor rotor blade stages 48, also referred to as the rotor blades of the rotor assembly of the compressor 14. The rotor blade stages 48 comprise a rotor disk (not shown in FIG 1) supporting an annular array of the rotor blades (not shown in FIG 1). The compressor 14 also comprises a casing 50 that surrounds the rotor blade stages 48 and supports the vane stages 46. The guide vane stages include an annular array of radially extending vanes that are mounted to the casing 50. The vanes are provided to present air flow at an optimal angle for the rotor blades at a given engine operational point. Some of the guide vane stages have variable vanes, where the angle of the vanes, about their own longitudinal axis, can be adjusted for angle according to air flow characteristics that can occur at different engine operational conditions.

The casing 50 defines a radially outer surface 52 of a passage 56 of the compressor 14 through which the air 24 flows generally axially, i.e. along a longitudinal axis of the central shaft 15. A radially inner surface 54 of the passage 56 is at least partly defined by a rotor drum 53 of the rotor which is partly defined by the annular array of rotor blade stages 48. The rotor or the rotor assembly of the compressor 14 generally includes the rotor drum 53, the rotor disks, and the rotor blades and is rotated by the shaft 22 during general operation of the gas turbine engine 10.

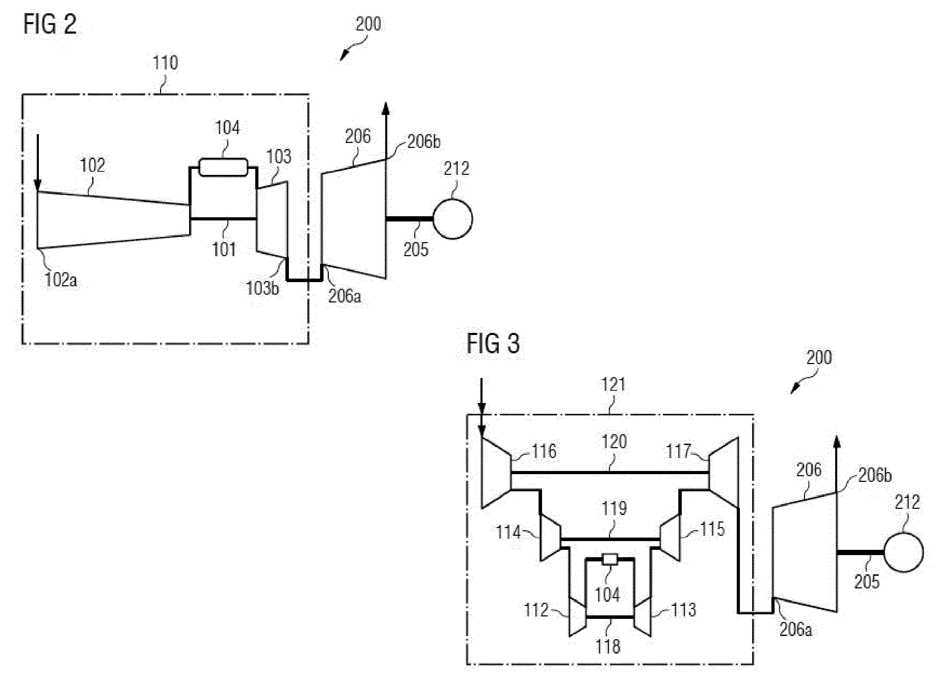

FIG 2 shows a conventional twin shaft gas turbine assembly 200 including a gas generator 110. The gas generator 110 comprises a shaft 101, on which a first compressor 102 and a first turbine 103 are mounted. The first compressor 102 is a high specific flow compressor, i.e. a compressor specifically designed to maximize the mass flow of air sucked into the compressor for a given speed of its shaft, which also maximizes the pressure ratio. A combustor 104 is provided between the first compressor 102 and the first turbine 103. In the combustor 104 a fuel is injected and burnt with the aid of the compressed air, working as a combustive, coming from the first compressor 102. After the burning process, a hot gas (similar to the working gas 34 in FIG 1) comprising combustion products exits the combustor 104 and enters the first turbine 103 where the gas is expanded. From an outlet 103b of the first turbine 103 the expanded gas is delivered to an inlet 206a of a second power turbine 206, i.e. a second turbine 206, which is mounted on a shaft 205. In the second power turbine 206 the gas is further expanded in order to generate a mechanical power output which is transferred to an electric generator 212 mounted on the shaft 205. After the expansion in the second turbine 206, the gas is generally released to the atmosphere through an outlet 206b of the second turbine 206.

FIG 3 shows another conventional twin shaft gas turbine assembly 200 including a different example of gas generator 121. Gas generator 121 includes a plurality of compressors (three compressors 112, 114, 116, in FIG 3) each running at a different speed. Gas generator 121 includes also a plurality of turbines (three turbines 113, 115, 117, in FIG 3), each turbine being mechanically connected, by means of a respective shaft 118, 119, 120, (or by means of other mechanical couplings) to one of the plurality of compressors 112, 114, 116, respectively. Looking in the flow direction of FIG 3 the three compressors 116, 114, 112, combustor 104 and the three turbines 113, 115, 117 are connected in series. The reason as to why the single compressor-turbine arrangement of the gas generator 110 is divided up in the plurality of compressor-turbine pairs arrangement of the gas generator 121 is that of allowing a higher speed of the compressor-turbine pair as the pressure increases and the compressor and turbine are, as a consequence, smaller. The smallest compressor 112 and smallest turbine 113 can rotate at the highest speed with respect to the other pairs, while the biggest compressor 116 and biggest turbine 117 can rotate at the lowest speed. This arrangement is beneficial in terms of efficiency. In an alternative embodiment (not shown) the shafts 118, 119, 120 may also be arranged concentrically rather than parallelly as show in FIG 3. In that case the shaft 119 would run through the centre of the shaft 118 and in the same way the shaft 120 would run through the shaft 119.

The first compressor 102, the first turbine 103, the shaft 101 and combustor 104 define a single unit which have been generally referred to as "gas generator" or "gas turbine". In the gas generator, the turbine delivers an expanded gas at certain conditions of pressure and temperature while the mechanical power generated by the turbine 103 is mainly used to drive the compressor 102. The second turbine 206, which receives the expanded gas from the first turbine 103 and generates a more significant power output, can be advantageously connected to the electrical generator 212 for electrical power generation or drive any mechanical load, e.g. a motor. In such cases, the second turbine may be referred to as "power turbine". A multi-shaft gas turbine, for example a "twin shaft gas turbine", includes a gas generator with one or more shafts and a power turbine mounted on another shaft, different from those included in the gas generator.

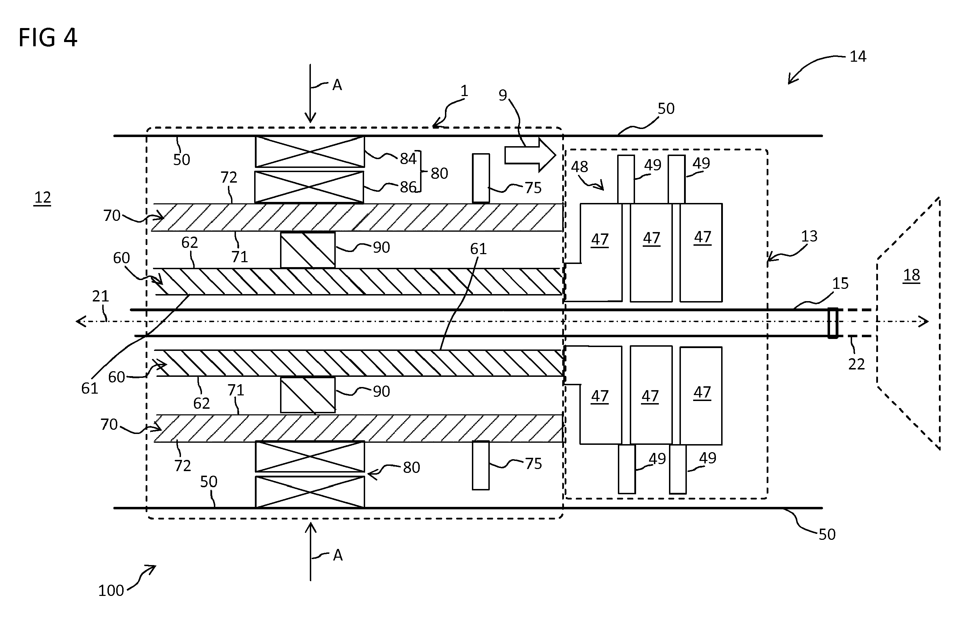

The present technique is described with reference to the above exemplary turbine engine having a single shaft or spool connecting a single, multi-stage compressor and a single, one or more stage turbine as in FIG 1. However, it should be appreciated that the present technique is equally applicable to two or three shaft engines, as shown in FIGs 2 and 3, and which can be used for industrial, aero or marine applications. Furthermore, the cannular combustor section arrangement 16 of FIG 1 is also used for exemplary purposes and it should be appreciated that the present technique is equally applicable to annular type and can type combustion chambers. A rotating device 1 (not shown in FIGs 1 to 3) of the present technique is incorporated with or integrated with the compressor 14 of FIG 1, or in the compressor 102 of FIG 2, or in the compressors of FIG 3, particularly in the compressor 116 of FIG 3. The terms axial, radial and circumferential as used hereinafter are made with reference to a longitudinal axis 21 of the rotating device 1 (shown in FIG 4), that is same as a longitudinal axis (not shown) of the compressor 14 when the rotating device 1 is within the compressor 14, which may be same as the axis 20 (shown in FIG 1) for a single shaft turbine 10 (shown in FIG 1) when the compressor 14 is positioned in the turbine 10.

FIG 4 represents an exemplary embodiment of the rotating device 1 of the present technique incorporated in a compressor 14. The rotating device 1 and the compressor 14 together form a compressor assembly 100. It may be noted that hereinafter, in FIGs 4 to 13, the rotating device 1 has been described in reference to the compressor 14 of FIG 1 of the gas turbine engine 10 of FIG 1, but the rotating device 1 is incorporable, and is incorporated, with the compressors 102 and 116 of FIGs 2 and 3, in a similar way and that the FIGs 4 to 13 are also applicable to the compressors 102 and 116.

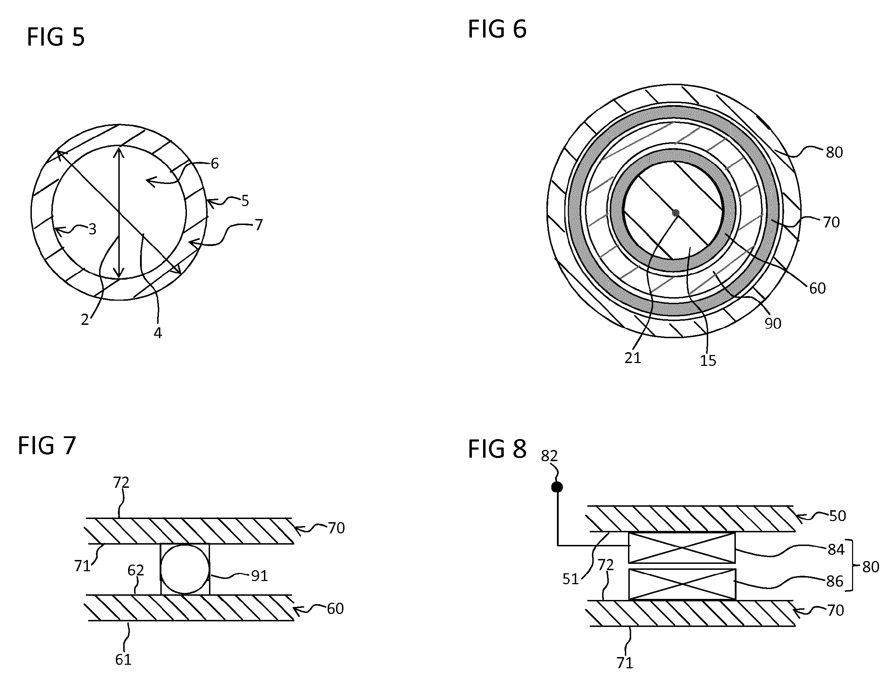

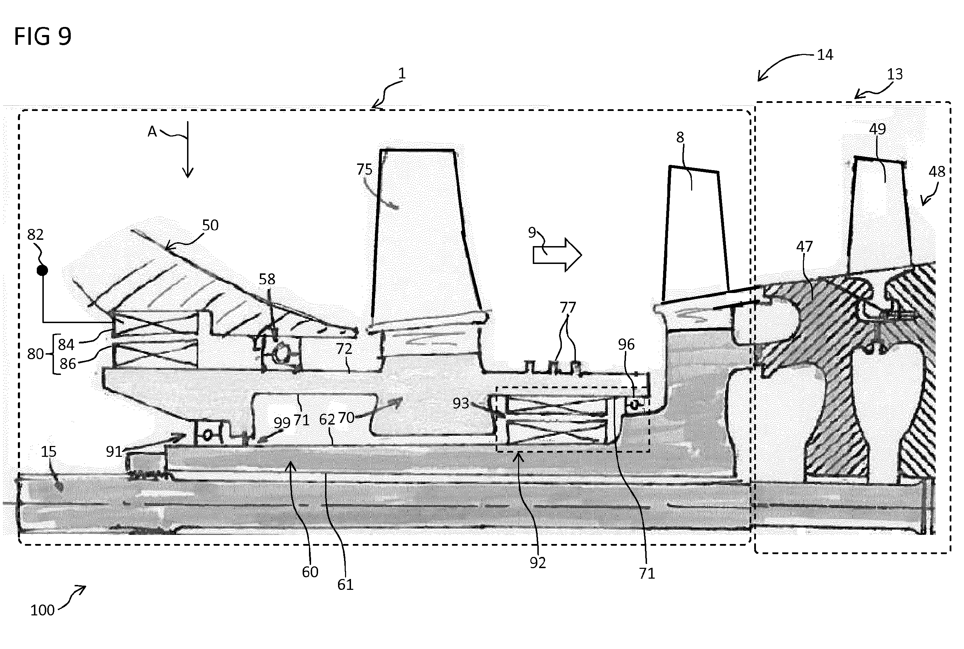

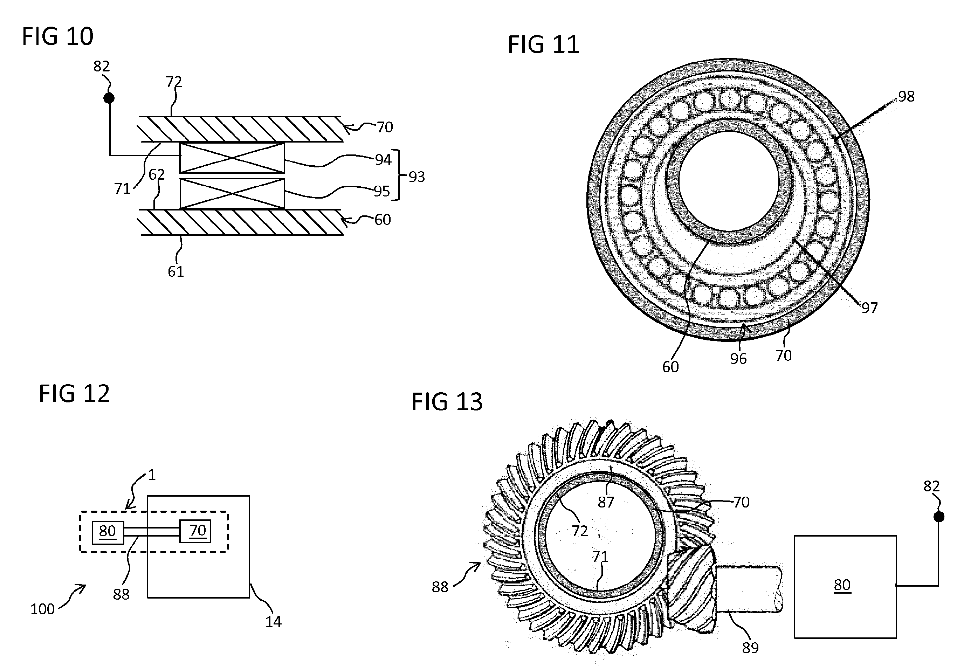

FIGs 4 and 9 have been explained hereinafter in combination with FIG 1 and FIG 6 which schematically represents section of the rotating device 1 within the compressor 14 sectioned at arrows marked 'A' in FIG 4. FIG 5 represents an explanation of a general scheme of terms used in the description of elements of the present technique. All components of the rotating device 1, or all components of the rotating device 1 except an external drive 80, are arranged or positioned within the compressor 14, i.e. within the casing 50 of FIG 1, of the gas turbine engine 10. The external drive 80 may be present either inside the casing 50 of the compressor 14 as shown in FIG 4, or outside the casing 50 as shown in FIG 12. The rotating device 1 enables control of a mass flow in the compressor 14, i.e. amount of air 24 flowing through the compressor 14, i.e. through the passage 56 (shown in FIG 1) of the compressor 14, generally towards the combustion section 16 (shown in FIG 1). The rotating device 1 is arranged or connected or positioned upstream of a rotor assembly 13 of the compressor 14. The rotor assembly 13, as aforementioned in FIG 1, generally includes one or more rotor disks 47 on which rows of rotor blades 49 are arranged to form one or more rotor blade stages 48 of the compressor 14. The air 24 entering through the inlet 12 flows axially in the compressor 14, i.e. in the passage 56 (shown in FIG 1). A general direction of flow of air 24, or mass flow, in the passage 56 is schematically depicted in FIG 4 by an arrow marked by reference numeral 9.

The rotating device 1 includes a first shaft 60, a second shaft 70, the external drive 80, an input port 82 and a bearing assembly 90. The first shaft 60 and the second shaft 70 are generally tubular in structure, both having hollow bores. FIG 5 shows a cross-section of a generally tubular structure, which may be the first shaft 60, the second shaft 70, optionally the external drive 80, or a bearing of the bearing assembly 90. In such a tubular structure, reference numeral 7 represents an annular body of the tubular structure; reference numeral 6 represents a bore, i.e. the hollow center of the tubular structure; reference numeral 5 represents an outer surface of the annular body 7 and hereinafter has also been referred to as the outer surface of the tubular structure; reference numeral 4 represents a diameter of the annular body 7 and hereinafter has also been referred to as the outer diameter of the tubular structure; reference numeral 3 represents a surface surrounding the bore 6 and hereinafter has also been referred to as the inner surface of the tubular structure; and reference numeral 2 represents a diameter of the bore 6 and hereinafter has also been referred to as the inner diameter of the tubular structure. FIG 5 is generally used to explain meanings of the terms 'bore', 'inner surface', 'inner diameter', 'outer surface', and 'outer diameter' for components of the rotating device 1 and/or of the compressor 14 having a generally tubular structure.

As shown in FIG 4, the first shaft 60 of the rotating device 1 is positioned or arranged within the compressor 14 axially upstream of the rotor assembly 13. The first shaft 60 is arranged concentrically around the central shaft 15 of the compressor 14, i.e. an inner surface 61 of the first shaft 60 faces the central shaft 15 of the compressor 14. The first shaft 60 is rotationally coupled to the rotor assembly 13. The first shaft 60 may be rotationally coupled to the rotor assembly 13 by connecting or physically contacting a part of or an end of the first shaft 60 with a rotating component, such as a rotating drum (not shown), or the rotor disk 47, of the rotor assembly 13. As a result of the rotational coupling of the first shaft 60 to the rotor assembly 13, the rotor assembly 13 drives a rotation of the first shaft 60, i.e. the first shaft 60 rotates along with the rotor assembly 13. The rotation of the first shaft 60 is in same direction and with same speed as the rotation of the rotor assembly 13. The first shaft 60, particularly an outer surface 62 of the first shaft 60 may optionally comprise a set of blades 8 (shown in FIG 9) that rotate along with the first shaft 60, and thus along with the rotor blades 49 of the rotor assembly 13, both having the same speed and direction of rotation.

In the rotating device 1, hereinafter also referred to as the device 1, the second shaft 70 is concentrically arranged around the first shaft 60, i.e. an inner surface 71 of the second shaft 70 faces the outer surface 62 of the first shaft 60. The second shaft 70 may be understood as a sleeve around the first shaft 60. The first shaft 60 and the second shaft 70 are not in direct physical contact with each other. The device 1 has at least one set of rotatable blades 75 extending radially outward from the second shaft 70, particularly from an outer surface 72 of the second shaft 70. The rotatable blades 75 are circumferentially arranged around the second shaft 70. The rotatable blades 75 may be integrally formed with the second shaft 70, as one part. Alternatively, the rotatable blades 75 may be formed separate from the second shaft 70 and may be arranged or fixed or clamped with a clamping arrangement (not shown) of the second shaft 70. As a result of being integrally formed with the second shaft 70 or being clamped on the second shaft 70, the rotatable blades 75 are rotationally coupled with the second shaft 70. As a result of the rotational coupling of the rotatable blades 75 with the second shaft 70, the second shaft 70 drives a rotation of the rotatable blades 75, i.e. the rotatable blades 75 rotate along with the second shaft 70. The rotation of the rotatable blades 75 is in same direction and with same speed as the rotation of the second shaft 70.

The device 1 also includes the bearing assembly 90. The bearing assembly 90 is positioned between the first shaft 60 and the second shaft 70, i.e. in between the outer surface 62 of the first shaft 60 and the inner surface 71 of the second shaft 70, or to say in the annular region radially in-between the first shaft 60 and the second shaft 70. The bearing assembly 90 decouples the rotation of the second shaft 70 from the rotation of the first shaft 60, i.e. the second shaft 70 does not rotate as a result of the rotation of the first shaft 60.

The bearing assembly 90 locates the first shaft 60 with respect to the second shaft 70, and additionally transfers, thrust, axial and radial loads, from the second shaft 70, and the rotatable blades 75 positioned on the second shaft 70, to the first shaft 60, which in turn transfers thrust, axial and radial loads, to the central shaft 15.

The external drive 80 is coupled to the second shaft 70. The external drive 80 is present radially outside of the second shaft 70, and optionally within the casing 50. More particularly the external drive 80 is either positioned in between the outer surface 72 of the second shaft 70 and the casing 50, or outside of the casing 50. The external drive 80 drives the rotation of the second shaft 70 with respect to a stationary reference such as the casing 50 and is independent of the rotation of the first shaft 60. The external drive 80, as used herein means a mechanical drive, particularly an electromechanical drive, which can be energized, i.e. which can be supplied with energy such as electrical energy, and as a result a mechanical motion, such as rotation, is obtained from the external drive 80 at the expense of the energy consumed by the external drive 80. The external drive 80 may be, but not limited to, a variable speed drive such as an electrical motor, a hydraulic motor, a pneumatic motor, etc.

The external drive 80 controls, i.e. initiates, speeds up and/or brakes, the rotation of the second shaft 70 independent of the rotation of the first shaft 60. The input port 82 receives electrical input for energizing the external drive 80. The input port 82 may be a rotary electrical interfaces or slip ring, for example, a contact electric brush or a stationary electrical interface. The input port 82 may receives the energy from an external source (not shown), i.e. from outside of the compressor 14. Structural components and principle of operation of the external drive 80, i.e. variable speed drives, hydraulic motors, pneumatic motors, as well as of the stationary and rotary electrical interfaces 82 are well known in the art of electromechanical devices and thus not explained herein in further details for sake of brevity.

By operation of the external drive 80 to drive the second shaft 70, which in turn rotates the rotatable blades 75, independent of the rotation of the rotor blades 49 of the rotor assembly 13, the mass flow in the compressor 14 may be increased by rotating the rotatable blades 75 faster than the rotor blades 49 of the rotor assembly 13, or may be decreased by rotating the rotatable blades 75 slower than the rotor blades 49 of the rotor assembly 13 as compared to a conventionally known compressor where the rotating device 1, and hence the rotatable blades 75 are not present.

The compressor 14, besides the device 1, may additionally include one or more rotatable connecting pieces, such as bearing 58 arranged around the outer surface 72 of the second shaft 70 and connected to the casing 50 or to another stationary part of the compressor 14, for example one-part extensions (not shown) of the casing 50.

Furthermore, in one embodiment of the device 1, as shown in FIG 9, the bearing assembly 90 includes a first bearing unit 91 and a second bearing unit 92. The first bearing unit 91 and the second bearing unit 92 are axially spaced apart from each other. This arrangement provides better stability to the rotation of the second shaft 70. The first bearing unit 91 is positioned axially upstream of the second bearing unit 92. In a related embodiment of the device 1, the first bearing unit 91 is a rotating element bearing, for example a ball bearing. FIG 7 schematically represents an exemplary embodiment of an arrangement of the first bearing unit 91 with respect to the first shaft 60 and the second shaft 70 of the rotating device 1. The first bearing unit 91, for example the ball bearing, is positioned in between the outer surface 62 of the first shaft 60 and the inner surface 71 of the second shaft 70, or to say in the annular region radially in-between the first shaft 60 and the second shaft 70. The outer surface of the ball bearing 91 is physically in contact with the inner surface 71 of the second shaft 70. The first shaft 60 is positioned in a bore of the ball bearing 91. The outer surface 62 of the first shaft 60 is in physical contact with the inner surface of the ball bearing 91. The first bearing unit 91 may be lubricated, if so needed, by providing lubricant from an axially upstream direction to the first bearing unit 91. A seal 99 may be used to prevent ingress of the lubricant axially inwards from the first bearing unit 91 by placing the seal 99 axially immediately after the first bearing unit 91.

The second bearing unit 92 may be a rotating element bearing, for example a ball bearing, in one embodiment (now shown) of the device 1. Alternatively, in another exemplary embodiment of the device 1 as shown in FIG 9 the second bearing unit 92 may include a magnetic bearing 93. The magnetic bearing 93 when energized is configured to maintain concentricity of the first shaft 60 and the second shaft 70.

Referring to FIG 8, in combination with FIG 4, an exemplary embodiment of the device 1 depicting an exemplary arrangement of the external drive 80, for example an electrical motor 80, has been explained hereinafter. The electrical motor 80 is positioned in between the outer surface 72 of the second shaft 70 and the casing 50, radially outside the second shaft 70. The electrical motor 80 may have multiple parts, for example a first part 84 and a second part 86. The different parts of the electric motor 80 such as a motor stator 84 and a motor rotor 86, depending on a type of the electrical motor 80, are arranged in contact with the casing 50 and with the second shaft 70, respectively.

FIGs 9, 10 and 11 have been used hereinafter to explain other exemplary embodiments of the device 1. As aforementioned, in an exemplary embodiment of the device 1, the second bearing unit 92 is the magnetic bearing 93 that maintains concentricity of the first shaft 60 and the second shaft 70, when the magnetic bearing 93 energized. FIG 10 schematically represents an exemplary embodiment of the magnetic bearing 93 positioned with respect to the first shaft 60 and the second shaft 70 of the rotating device 1. The magnetic bearing 93 is positioned in between the outer surface 62 of the first shaft 60 and the inner surface 71 of the second shaft 70, or to say in the annular region radially in-between the first shaft 60 and the second shaft 70. The outer surface of the magnetic bearing 93 is physically in contact with the inner surface 71 of the second shaft 70. The first shaft 60 is positioned in a bore of the magnetic bearing 93. The outer surface 62 of the first shaft 60 is in physical contact with the inner surface of the magnetic bearing 93. The magnetic bearing 93 may have a stator 94 that is positioned or arranged in physical contact with the inner surface 71 of the second shaft 70, and a rotor 95 that is placed in physical contact with the outer surface 62 of the first shaft 60. The magnetic bearing 93 may be energized, i.e. an electrical current may be supplied to the magnetic bearing 93 by drawing electrical current from the input port 82. Additionally, the second bearing unit 92 includes a catcher bearing 96. The catcher bearing 96 provides location of the first shaft 60 to the second shaft 70 when the magnetic bearing 93 is de-energized.

The catcher bearing 96 is positioned in-between the first shaft 60 and the second shaft 70, particularly in between the outer surface 62 of the first shaft 60 and the inner surface 71 of the second shaft 70, or to say in the annular region radially in-between the first shaft 60 and the second shaft 70. An outer surface 98 of the catcher bearing 96 is physically in contact with the inner surface 71 of the second shaft 70. The first shaft 60 is positioned in a bore of the catcher bearing 93. The diameter of the outer surface 62 of the first shaft 60 is lesser than the inner diameter of the catcher bearing 96 and thus when the first shaft 60 is concentrically located in bore of the catcher bearing 96, which is the case when the magnetic bearing 93 is energized, then the first shaft 60 is not in physical contact with the inner surface 97 of the catcher bearing 96, but levitating in a central axis of the bore of the catcher bearing 96. This results in an arrangement where the second shaft 70 is concentric with the first shaft 60. There exists a clearance between the inner surface 97 of the catcher bearing 96 and the outer surface 62 of the first shaft 60.

FIG 11 shows an arrangement of the catcher bearing 96 with respect to the first shaft 60 and the second shaft 70 of the rotating device 1 when the magnetic bearing 93 is de-energized. When the magnetic bearing 93 is de-energized, the second shaft 70 is no longer held concentrically with first shaft 60. The second shaft 70, along with the part of the catcher bearing 96, drops vertically until the inner surface 97 of the catcher bearing 96 physically contacts the outer surface 62 of the first shaft 60. A distance of drop is intended to be less than a radial clearance in the magnetic bearing 93, i.e. a clearance between the stator 94 of the magnetic bearing 93 and the rotor 95 of the magnetic bearing 93, and therefore under no circumstances does the outer surface 62 of the first shaft 60 touches or contacts the stator 94 of the magnetic bearing 93.

The rotatable blades 75 according to the present technique are similar in structure to the rotor blade 49 and may have components or parts, such as an aerofoil, platform and root, similar to conventionally known rotor blades. Furthermore, in an embodiment (not shown) of the compressor 14, a vane stage may be present axially upstream of the rotatable blades 75.

The vane stage may comprise guide vanes fixed from the casing 50. The guide vanes may be stationary or variable, and similar to the vane stages 46 of FIG 1. A vane stage (not shown) may also be present between the rotatable blades 75 and the blade 8 in embodiment shown in FIG 9. Such vane stages may be located above the outer surface 72 of the second shaft 70, preferable arranged over air seals 77, which may be formed integrally on the surface 72 of the second shaft 70.

FIGs 12 and 13, hereinafter present another exemplary embodiment of the compressor assembly 100. As depicted in FIG 12, the external drive 80 may be physically located or positioned outside of the compressor 14, in particular outside of the casing 50 of the compressor 14. In such an embodiment of the compressor assembly 100, the external drive 80 is connected to the second shaft 70 by using mechanical means 88 that transfer a motion from the external drive 80 to the second shaft 80. For example the mechanical means 88 may be a gear assembly 88. FIG 13 schematically represent an exemplary embodiment of the gear assembly 88 arranged with respect to the external drive 80 and the second shaft 70. The gear assembly may be, but not limited to, a bevel gear. The bevel gear 88 has a crown wheel 87 and a drive shaft 89. The crown wheel 87 is arranged around the outer surface 72 of the second shaft 70 such that the second shaft 70 is closely fitted in the bore of the crown well 87 i.e. the second shaft 70 rotates along with the crown wheel 87. The drive shaft 89 is in turn connected to the external drive 80. The external drive 80 rotates, and/or controls the rotation of, the drive shaft 89 which in turn rotates, and/or controls the rotation of, the crown wheel 87.

While the present technique has been described in detail with reference to certain embodiments, it should be appreciated that the present technique is not limited to those precise embodiments. It may be noted that, the use of the terms 'first', 'second', etc. does not denote any order of importance, but rather the terms 'first', 'second', etc. are used to distinguish one element from another. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A rotating device (1) connectible with a compressor (14,102,116) for a gas turbine engine (10,110,121) for controlling a mass flow in the compressor (14,102,116), the rotating device (1) comprising:
- a first shaft (60) configured to be positioned within the compressor (14,102,116) axially upstream of the rotor assembly (13) and concentrically around a central shaft (15) of the compressor (14,102,116), wherein the first shaft (60) is configured to be rotationally coupled to the rotor assembly (13) such that a rotation of the first shaft (60) is driven by the rotor assembly (13);
- a second shaft (70) configured to be positioned within the compressor (14,102,116) concentrically arranged around the first shaft (60);
- at least one set of rotatable blades (75) extending radially outward from the second shaft (70), wherein the rotatable blades (75) are rotationally coupled with the second shaft (70) such that the rotatable blades (75) rotate along with the second shaft (70);
- a bearing assembly (90) positioned radially between the first shaft (60) and the second shaft (70), wherein the bearing assembly (90) is configured to decouple a rotation of the second shaft (70) from the rotation of the first shaft (60);
- an external drive (80) coupled to the second shaft (70), wherein the external drive (80) is configured to control the rotation of the second shaft (70); and
- an input port (82) for receiving electrical input for energizing the external drive (80).

2. The rotating device (1) according to claim 1, wherein the bearing assembly (90) comprises a first bearing unit (91) and a second bearing unit (92), both positioned radially between the first shaft (60) and the second shaft (70) and axially apart from each other, and wherein the first bearing unit (91) is positioned axially upstream of the second bearing unit (92).

3. The rotating device (1) according to claim 2, wherein the first bearing unit (91) comprises a rotating element bearing.

4. The rotating device (1) according to claim 2 or 3, wherein the second bearing unit (92) comprises a rotating element bearing.

5. The rotating device (1) according to claim 2 or 3, wherein the second bearing unit (92) comprises a magnetic bearing (93) configured, when energized, to maintain concentricity of the first shaft (60) and the second shaft (70).

6. The rotating device (1) according to claim 5, wherein the second bearing unit (92) comprises a catcher bearing (96) configured to provide location of the first shaft (60) to the second shaft (70) when the magnetic bearing (93) is de-energized.

7. The rotating device (1) according to any of claims 1 to 6, wherein the external drive (80) is a variable speed drive.

8. The rotating device (1) according to claim 7, wherein the variable speed drive is an electrical motor.

9. The rotating device (1) according to any of claims 1 to 6, wherein the external drive (80) is one of a hydraulic motor and a pneumatic motor.

10. The rotating device (1) according to any of claims 1 to 9, wherein the rotating device (1) comprises a plurality of sets of rotatable blades (75) positioned on the second shaft (70) and wherein the rotatable blades (75) of each set extend radially outward from the second shaft (70) and wherein the sets are axially distanced from each other.

11. A compressor assembly (100) for a gas turbine engine (10,110,121), the compressor assembly (100) comprising:
- a central shaft (15) of a compressor (14,102,116);
- a rotor assembly (13) of the compressor (14,102,116), the rotor assembly (13) concentrically arranged around the central shaft (15); and
- a rotating device (1) according to any of claims 1 to 10, wherein the first shaft (60) is positioned within a casing (50) of the compressor (14,102,116) axially upstream of the rotor assembly (13) and concentrically around the central shaft (15), and wherein the first shaft (60) is rotationally coupled to the rotor assembly (13).

12. The compressor assembly (100) according to claim 11, wherein the external drive (80) is positioned within the casing (50) of the compressor (14,102,116), radially in between the second shaft (70) and the casing (50).

13. The compressor assembly (100) according to claim 11, wherein the external drive (80) is positioned outside the casing (50) of the compressor (14,102,116).

14. The compressor assembly (100) according to any of claims 11 to 13, wherein the external drive (80) is coupled with the second shaft (70) via a gear assembly (88).

15. A gas turbine engine (10,110,121) comprising a compressor assembly (100) according to any of claims 11 to 14.
